# EUROPÄISCHE PATENTSCHRIFT

(11) **EP 1 035 318 B1**
(45) Veröffentlichungstag und Bekanntmachung des Hinweises auf die Patenterteilung: **21.12.2005**
(21) Anmeldenummer: 00104632.5
(22) Anmeldetag: 03.03.2000
(51) Int. Cl.: F02M 25/07

(54) **Abgasrückführsystem für eine Brennkraftmaschine**
Exhaust gas recirculation system for a combustion engine
Système de recirculation de gaz d'échappement pour un moteur à combustion

(30) Priorität: 11.03.1999 DE 19910846
(43) Veröffentlichungstag der Anmeldung: 13.09.2000
(73) Patentinhaber: ADAM OPEL AG, 65423 Rüsselsheim (DE)
(72) Erfinder: Dickgreber, Frank, Dipl.-Ing., 55128 Mainz-Bretzenheim (DE)
(74) Vertreter: Daniel, Ulrich W.P.

(56) Entgegenhaltungen:
- DE-A- 19 530 308
- PATENT ABSTRACTS OF JAPAN vol. 006, no. 142 (M-146), 31. Juli 1982 (1982-07-31) & JP 57 062954 A (AISIN SEIKI CO LTD), 16. April 1982 (1982-04-16)
- PATENT ABSTRACTS OF JAPAN vol. 1997, no. 03, 31. März 1997 (1997-03-31) & JP 08 303307 A (NISSAN MOTOR CO LTD), 19. November 1996 (1996-11-19)

## Beschreibung

Die Erfindung betrifft ein Abgasrückführsystem für eine Brennkraftmaschine gemäß dem Oberbegriff des Patentanspruches 1.

Es ist bekannt, daß die Rückführung von einer dem jeweiligen Betriebszustand der Brennkraftmaschine angepaßten Abgasmenge eine wirksame Maßnahme darstellt, um die schädlichen Bestandteile im Abgas, insbesondere die bei Magerbetrieb auftretenden Stickoxide zu reduzieren.

Jedoch werden mit der zurückgeführten Abgasmenge auch Rußpartikel und Aschebestandteile aus dem motorischen Verbrennungsprozeß mitgeführt, die sich auf den Funktionsteilen des Abgasrückführventils absetzen und dort Störungen hervorrufen können.

Um dieses Problem zu lösen, wird mit DE-OS 195 30 308 A1 vorgeschlagen, die Temperatur des rückgeführten Abgasanteils zu erfassen und mittels einer Erhöhung der Abgasrate die Temperatur im Verlauf der Abgasrückführungsleitung und damit auch am Abgasrückführventil soweit zu erhöhen, daß ein Temperaturbereich mit verstärkter Ablagerungsneigung deutlich überschritten ist. Kann eine solche Temperatur nicht erreicht werden, weil sich z. B. der Motor noch in einer Aufwärmphase befindet oder werden unzulässig hohe Temperaturen erreicht, dann wird die Abgasrückführung vollständig gestoppt.

Durch eine solche Maßnahme wird aber die für eine optimale Beeinflussung der Abgaszusammensetzung erforderliche Abgasrückführrate in einem relativ weiten Betriebsbereich der Brennkraftmaschine negativ beeinflußt, indem der Zwang zur Veränderung der rückgeführten Abgasmenge und damit der Abgasrückführrate nicht nur von den Parametern der Brennkraftmaschine abhängig ist, sondern auch von einer zu erreichenden Selbstreinigungstemperatur im Abgasrückführsystem. Als weiterer Stand der Technik sei das Dokument JP 57 062 954 genannt.

Der Erfindung liegt die Aufgabe zugrunde, ein Abgasrückführungssystem der im Oberbegriff des Patentanspruches 1 genannten Art dahingehend zu verbessern, daß Störungen oder gar ein Ausfall des Abgasrückführventils infolge sich absetzender Schmutzpartikel vermieden werden, ohne daß die für eine optimale Beeinflussung der Abgaszusammensetzung erforderliche Abgasrückführrate verändert werden muß.

Erfindungsgemäß wird diese Aufgabe mit den Merkmalen des Anspruches 1 gelöst. Vorteilhafte Weiterbildungen der Erfindung sind mit den abhängigen Ansprüchen gegeben.

Arbeitet eine mit einem erfindungsgemäß ausgebildeten Abgasrückführsystem ausgerüstete Brennkraftmaschine in einem Lastbereich, in welchem eine Abgasrückführung (AGR) in üblicher Weise erfolgt, dann wird gemäß der Erfindung ständig geprüft, ob ein Schubbetrieb erfolgt. Bekanntlich tritt Schubbetrieb bei in Kraftfahrzeugen verwendeten Brennkraftmaschinen relativ häufig auf. Wird erkannt, daß sich dieser Schubbetrieb über eine Mindestzeit hinaus erstreckt, dann wird von der elektronischen Steuereinheit am Abgasrückführventil eine Reinigungsfunktion ausgelöst, indem der Stellantrieb, des Abgasrückführventils niederfrequent mit voller Leistung, also beim Kraftfahrzeug im allgemeinen mit 12 Volt, angesteuert wird. Das Ventilglied bewegt sich dabei im Rhythmus der Ansteuerfrequenz zwischen seinen Extremlagen von offen und zu.

Dabei werden eventuell am Ventilschaft oder am Ventilsitz anhaftende Partikel mechanisch abgestreift bzw. abgeklopft. Dieses Ansteuern zum Zwecke der Reinigung wird über einen Zeitraum von zwei bis fünf Sekunden aufrechterhalten. Liegt nach Ablauf einer Reinigungsfunktion noch Schubbetrieb vor, dann wird das Abgasrückführventil auf den für Schubbetrieb geltenden geschlossenen Querschnitt eingeregelt. Erst bei erneutem Schubbetrieb wird die Reinigungsfunktion erneut aktiviert. Wird jedoch während dieser Reinigungsfunktion der Schubbetrieb unterbrochen, dann wird auch die Reinigungsfunktion sofort abgebrochen und das Abgasrückführventil stellt wieder einen Durchlaßquerschnitt ein, der gemäß den Motorparametern die angemessene Abgasrückführrate sicherstellt.

Die elektronische Steuereinheit zum Aktivieren der Reinigungsfunktion kann vorteilhaft mit dem bei Brennkraftmaschinen ohnehin vorhandenen elektronischen Motorsteuergerät integriert sein. An diesem liegen alle Signale der für die Ansteuerung des Abgasrückführventils erforderlichen Parameter der Brennkraftmaschine von entsprechenden Sensoren an, so daß keine zusätzlichen Sensoren und auch kein zusätzliches Steuergerät erforderlich ist.

Ein Ausführungsbeispiel der Erfindung ist nachstehend anhand von Zeichnungen näher beschrieben. Es zeigen
- Fig. 1:: eine schematische Ansicht der Gesamtkonstruktion eines Abgasrückführsystems;
- Fig. 2:: eine vergrößerte Darstellung des Ventilgliedes in einem Abgasrückführventil;
- Fig. 3:: ein Flußdiagramm, welches die Ansteuer-Routine für die Reinigungsfunktion zeigt.

Eine Brennkraftmaschine 1 weist eine Ansaugleitung 2 und eine Abgasleitung 3 auf. Zwischen der Abgasleitung 3 und der Ansaugleitung 2 verläuft eine Abgasrückführleitung 4, in deren Verlauf ein Abgasrückführventil 5 angeordnet ist. Das Abgasrückführventil 5 besitzt ein Ventilglied 6, welches bei Ansteuerung eines Stellantriebs 7 einen Durchgang freigibt oder schließt. Die Ansteuerung des Abgasrückführungsventils 5 erfolgt über eine Steuerleitung 8 von einem elektronischen Steuergerät 9, dem über Input-Leitungen 10 in an sich bekannter Weise Signale von nicht dargestellten Sensoren an der Brennkraftmaschine 1 zugeführt werden.

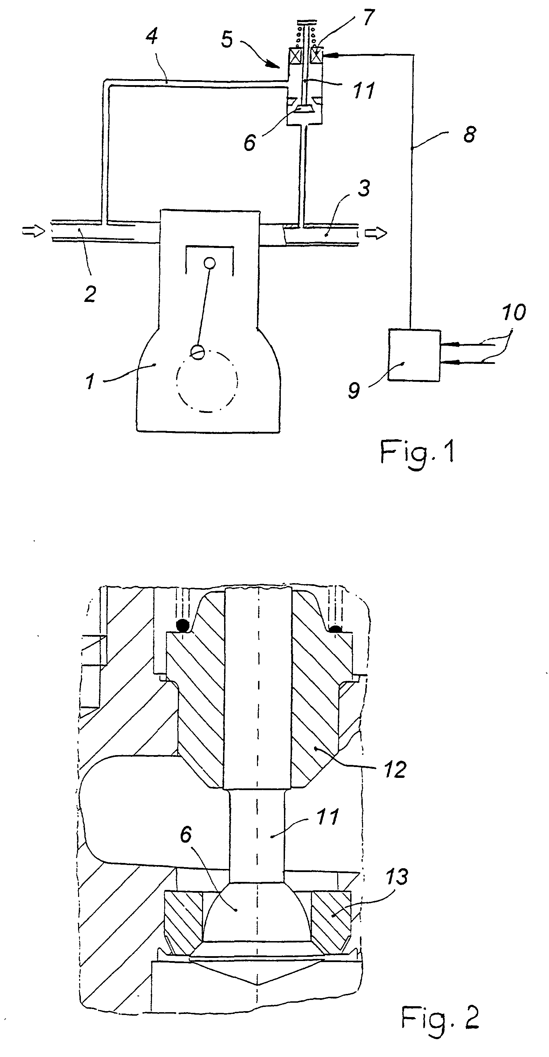

Wie Figur 2 zeigt ist das Ventilglied 6 an einem Ventilschaft 11 befestigt, der in einer Buchse 12 geführt ist. Das Ventilglied 6 dichtet an einer Dichtkante eines Ventilsitzringes 13 ab. Bei geöffnetem Abgasrückführventil 5 strömt Abgas aus der Abgasleitung 3 durch die Abgasrückführleitung 4 in die Ansaugleitung 2. Mit dem Abgas gelangen Partikel in das Abgasrückführventil 5, die sich teilweise sowohl am Ventilglied 6 und dem Ventilschaft 11 als auch am Ventilsitzring 13 absetzen. Das kann dazu führen, daß der Ventilschaft 11 in der Buchse 12 stecken bleibt und das Abgasrückführventil 5 blockiert oder daß das Ventilglied 6 gegenüber dem Ventilsitzring 13 nicht vollständig abdichtet. Die Folgen zeigen sich durch einen fehlerhaften Betrieb der Brennkraftmaschine 1 und in einer Verschlechterung der Abgaswerte.

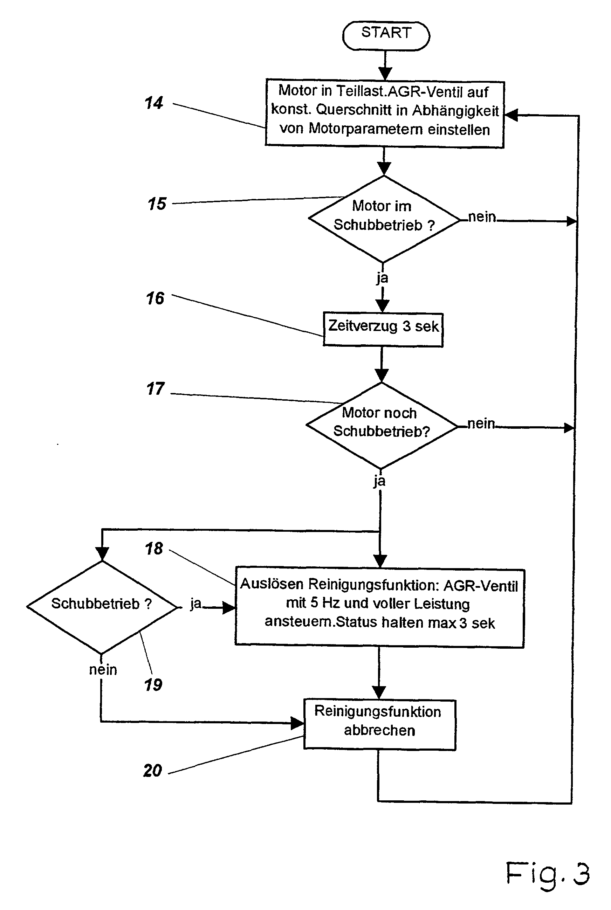

Gemäß der Erfindung ist daher die mit Figur 3 dargestellte Ansteuer-Routine für eine Reinigungsfunktion der Teile des Abgasrückführventiles 5 durch das elektronische Steuergerät 9 vorgesehen. Bei der in Teillast gemäß Aktivität 14 betriebenen Brennkraftmaschine 1 wird gemäß Aktivität 15 geprüft, ob Schubbetrieb vorliegt. Wird Schubbetrieb erkannt, dann wird nach einem Zeitverzug von 3 Sekunden gemäß Aktivität 16 nun nach Aktivität 17 erneut geprüft, ob weiterhin Schubbetrieb vorliegt. Ist dies der Fall, dann wird gemäß Aktivität 18 das Abgasrückführventil 5 mit einer Frequenz von 5 Hertz angesteuert, und zwar mit voller Betriebsleistung, also bei einem Kraftfahrzeug mit der vollen Bordspannung, die im allgemeinen 12 Volt beträgt. Dieser Zustand wird maximal 3 Sekunden lang aufrechterhalten. Während dieser Zeit bewegt sich das Ventilglied 6 und der mit ihm verbundene Ventilschaft 11 mit der Ansteuerfrequenz von 5 Hertz mit relativ großer Kraft zwischen extremer Offenstellung und Schließstellung. Am Ventilschaft 11 und am Ventilglied 6 sowie am Ventilsitzring 13 anhaftende Schmutzpartikel werden dabei abgestreift bzw. abgeklopft.

Gemäß Aktivität 19 wird während der Reinigungsfunktion gleichzeitig gemäß Aktivität 18 ständig geprüft, ob weiterhin Schubbetrieb vorliegt. Ist dies der Fall, dann wird nach Ablauf der 3 Sekunden Reinigungsfunktion auf die übliche Schub-Einstellung des Abgasrückführventiles 5 zurückgegangen. Wird der Schubbetrieb vorher abgebrochen, dann wird damit auch die Reinigungsfunktion gemäß Aktivität 20 abgebrochen und auf die übliche Teillasteinstellung nach Aktivität 14 zurückgegangen. Bei einem erneuten Schubbetrieb, der sich länger als 3 Sekunden erstreckt, wiederholt sich dieser Vorgang.

Damit bleiben die Schließteile des Abgasrückführventiles 5 ständig frei von schädlichen Ablagerungen. Die Funktionsfähigkeit des Abgasrückführsystems bleibt auch bei Rußbildung im Abgas gewährleistet.

Die Erfindung ist in vorteilhafter Weise sehr einfach und auch nachträglich in bestehende Abgasrückführsysteme implementierbar, da lediglich die elektronische Steuerung 9, vorzugsweise in Form der Motorsteuerung, mit einem veränderten Programm versehen werden muß.

## Patentansprüche

1. Abgasrückführsystem für eine Brennkraftmaschine (1) mit einer Abgasrückführungsleitung (4) zum Rückführen eines Teils des Abgases von einer Abgasleitung (3) der Brennkraftmaschine (1) zu einer Ansaugleitung (2) der Brennkraftmaschine (1), einem ansteuerbaren Abgasrückführventil (5) im Verlauf der Abgasrückführleitung (4) zum Regeln einer Abgasrückführrate sowie einem elektronischen Steuergerät (9) zum Ansteuern des Abgasrückführventils (5) in Abhängigkeit von den aktuellen Betriebsparametern (10) der Brennkraftmaschine (1), **dadurch gekennzeichnet, daß** mittel zum Erkennen eines Schubbetriebes (15) der Brennkraftmaschine (1) vorgesehen sind und daß das Steuergerät (9) nach Verstreichen einer Zeit von 2 bis 5 Sekunden im Schubbetrieb (16) das Abgasrückführventil (5) in einem Intervall von 3 bis 10 Hertz mit voller Leistung ansteuert, diesen Ansteuerrhythmus 2 bis 5 Sekunden aufrechterhält (18) und dann auf den für den aktuellen Motorbetrieb angemessenen konstanten Querschnitt einstellt (14).

2. Abgasrückführsystem nach Anspruch 1, **dadurch gekennzeichnet, daß** die nach Erkennen von Schubbetrieb (15) über eine Mindestzeitdauer (16) ausgelöste Ansteuerung in einem Intervall von 3 bis 10 Hertz mit voller Leistung (18) vom Steuergerät abgebrochen wird, wenn der Schubbetrieb unterbrochen wird (19).

3. Abgasrückführsystem nach Anspruch 1, **dadurch gekennzeichnet, daß** das Steuergerät (9) Teil eines elektronischen Motorsteuergerätes ist.

## Claims

1. Exhaust gas recirculation system for an internal combustion engine (1) comprising an exhaust gas recirculation line (4) for recirculating some of the exhaust gas from an exhaust gas line (3) of the i.c. engine (1) to an intake line (2) of the i.c. engine (1), a controllable exhaust gas recirculation valve (5) in the course of the exhaust gas recirculation line (4) for adjusting an exhaust gas recirculation rate, and an electronic control unit (9) for controlling the exhaust gas recirculation valve (5) in dependence upon the current operating parameters (10) of the i.c. engine (1), **characterized in that** means for detecting an deceleration fuel cut off (15) of the i.c. engine (1) are provided and that the control unit (9) at the end of a period of 2 to 5 seconds of deceleration fuel cut off (16) drives the exhaust gas recirculation valve (5) in a range of 3 to 10 Hz with full power, maintains this drive rhythm for 2 to 5 seconds (18) and then sets the constant orifice appropriate for the current engine operation (14).

2. Exhaust gas recirculation system according to claim 1, **characterized in that** the triggering in an interval of 3 to 10 Hz with full power (18) that is initiated after detecting deceleration fuel cut off (15) for a minimum period (16) is discontinued by the control unit if the deceleration fuel cut off is interrupted (19).

3. Exhaust gas recirculation system according to claim 1, **characterized in that** the control unit (9) is part of an electronic engine control unit.

## Revendications

1. Système de recirculation de gaz d'échappement pour un moteur à combustion interne (1) avec une conduite (4) de recirculation des gaz d'échappement pour assurer la recirculation d'une partie des gaz d'échappement depuis une tubulure de gaz d'échappement (3) du moteur à combustion interne (1) vers une tubulure d'aspiration (2) du moteur à combustion interne (1), avec une valve de recirculation des gaz d'échappement (5) pouvant être commandée, qui se trouve sur le trajet de la conduite de recirculation des gaz d'échappement (4) pour régler un taux de recirculation des gaz d'échappement, ainsi qu'avec une unité électronique de commande (9) pour commander la valve de recirculation des gaz d'échappement (5) en fonction des paramètres de fonctionnement actuels (10) du moteur à combustion interne (1), **caractérisé en ce que** des moyens pour détecter un fonctionnement en propulsion (15) du moteur à combustion interne (1) sont prévus et **en ce qu'**après l'écoulement d'une période de 2 à 5 secondes en fonctionnement en propulsion (16), l'unité de commande (9) active la valve de recirculation des gaz d'échappement (5) à pleine puissance selon un intervalle de 3 à 10 Hz, maintient ce rythme d'activation de 2 à 5 secondes (18) et règle ensuite la section transversale constante appropriée pour le mode de fonctionnement actuel du moteur (14).

2. Système de recirculation de gaz d'échappement selon la revendication 1, **caractérisé en ce que** l'activation avec un intervalle de 3 à 10 Hz à pleine puissance (18), qui est déclenchée après une durée minimale (16) après la détection du fonctionnement en propulsion (15), est arrêtée par l'unité de commande lorsque le fonctionnement en propulsion (19) est interrompu.

3. Système de recirculation de gaz d'échappement selon la revendication 1, **caractérisé en ce que** l'unité de commande (9) est une partie d'une unité électronique de commande du moteur.
